# EUROPEAN PATENT APPLICATION

(11) **EP 3 211 517 A1**
(43) Date of publication of application: **30.08.2017**
(21) Application number: 17156891.8
(22) Date of filing: 20.02.2017
(51) Int. Cl.: G06F 3/0488, G06K 9/00

(54) **SIGNATURE INPUT DEVICE**

(30) Priority: 26.02.2016 JP 2016035755
(71) Applicant: Toshiba TEC Kabushiki Kaisha, Tokyo 141-0032 (JP)
(72) Inventor: SUZUKI, Kenya, Shinagawa-ku, Tokyo 141-8562 (JP)
(74) Representative: Takeuchi, Maya

(57) **Abstract**

The signature input device (100) includes a display unit (110), a guide display processing unit (1301), an input unit (120), a write processing unit (1302), and an output processing unit (1303). The display unit (110) includes a screen displaying an image and has an input field (113) indicating an area at which a signature is written. The guide display processing unit (1301) displays guide information (115) when a signature is written inside the input field (113). The input unit (120) is provided on a surface of the display unit (110) and receives an input by being in contact with a detection object. The write processing unit (1302) displays, inside the input field (113), a locus of the detection object brought into contact with the input field. The output processing unit outputs data of an image displayed inside the input field.

## Description

### FIELD

The present invention relates to signature imputing technologies in general, and embodiments described herein relate in particular to a signature input device comprising several units, a signature input system including corresponding means and a method for inputting signature comprising the corresponding steps.

### BACKGROUND

In the related art, a signature input device is used by being connected to an electronic device such as a POS terminal device. The signature input device is, for example, a tablet type terminal device, creates image data of handwritten characters from a locus of touch input, and outputs the image data.

In the signature input device of the related art, guide information, such as "Please sign here.", used when signing is performed is displayed on a side (upper side or lower side) other than an input field where a handwritten input is received.

However, guide information displayed on a side other than the input field may not catch the signer's eye. This event remarkably appears, for example, when the signer is nervous about an unfamiliar electronic device.

To solve such problems, there is provided a signature input device comprising:
a display unit that includes a screen displaying an image and has an input field indicating an area at which a signature is written;
a guide display processing unit that displays guide information when a signature is written inside the input field;
an input unit that is provided on a surface of the display unit and receives an input by being in contact with a detection object;
a write processing unit that displays, inside the input field, a locus of the detection object brought into contact with the input field; and
an output processing unit that outputs data of an image displayed inside the input field.

Preferably, when the input unit receives an input into the input field, the write processing unit displays the locus to be superposed on the guide information.

Preferably still, the write processing unit erases the locus when the detection object brought into contact with the input unit moves from an inside of the input field to an outside of the input field.

Preferably yet, the guide display processing unit instructs a size of characters for a signature according to the guide information.

Preferably further, the guide display processing unit displays the guide information in light color, and the write processing unit displays the locus in a color darker than the guide information.

The invention also relates to a system for inputting signature including:
a display means that includes a screen displaying an image and has an input field indicating an area at which a signature is written;
a guide display processing means that displays guide information when a signature is written inside the input field;
an input means that is provided on a surface of the display means and receives an input by being in contact with a detection object;
a write processing means that displays, inside the input field, a locus of the detection object brought into contact with the input field; and
an output processing means that outputs data of an image displayed inside the input field.

Suitably, when the input means receives an input into the input field, the write processing means displays the locus to be superposed on the guide information.

Suitably still, the write processing means erases the locus when the detection object brought into contact with the input means moves from an inside of the input field to an outside of the input field.

Suitably yet, the guide display processing means instructs a size of characters for a signature according to the guide information.

Suitably further, the guide display processing means displays the guide information in light color, and
the write processing means displays the locus in a color darker than the guide information.

The invention further relates to a method for inputting signature, comprising the steps of:
- providing, in a display means, a screen displaying an image and an input field indicating an area at which a signature is written;
- displaying, by a guide display processing means, guide information when a signature is written inside the input field;
- providing an input means on a surface of the display means, the input means receiving an input by being in contact with a detection object;
- displaying, inside the input field, by a write processing means, a locus of the detection object brought into contact with the input field; and
- outputting, by an output processing means, data of an image displayed inside the input field.

Typically, the displaying step by the write processing means comprises displaying the locus to be superposed on the guide information, when the input means receives an input into the input field.

Typically still, the displaying step by the write processing means comprises erasing the locus when the detection object brought into contact with the input means moves from an inside of the input field to an outside of the input field.

Typically yet, the displaying step by the guide display processing means comprises instructing a size of characters for a signature according to the guide information.

Typically further, the displaying step by the guide display processing means comprises displaying the guide information in light color, and the displaying step by the write processing means comprises displaying the locus in a color darker than the guide information.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 illustrates a diagram of appearances of a portable terminal device which is a signature input device and a POS terminal device which is a higher device to which the portable terminal device is connected in an exemplary embodiment.
FIG. 2 illustrates a block diagram of a configuration of the portable terminal device.
FIG. 3 illustrates a block diagram of a functional configuration of the portable terminal device.
FIG. 4 illustrates a front view of the portable terminal device which indicates display contents of LCD before signing is performed.
FIG. 5 illustrates a flowchart indicating a flow of processing performed by a control unit of the portable terminal device.
FIGs. 6A to 6C illustrate diagrams indicating transitions of the display contents of the LCD.
FIG. 7 illustrates a front view of an example of screen display of a portable terminal device in a modification example of the exemplary embodiment.

### DETAILED DESCRIPTION

A problem to be solved by the present disclosure is to provide a signature input device which makes guidance available when signing is performed easy to catch the signer's eye even when the signer is nervous.

A signature input device of an exemplary embodiment includes a display unit, a guide display processing unit, an input unit, a write processing unit, and an output processing unit. The display unit includes a screen displaying an image and has an input field indicating an area at which a signature is written. The guide display processing unit displays guide information when a signature is written inside the input field. The input unit is provided on a surface of the display unit and receives an input by being in contact with a detection object. The write processing unit displays, inside the input field, a locus of the detection object brought into contact with the input field. The output processing unit outputs data of an image displayed inside the input field.

Though exemplary embodiments are presented mainly in the form of a device, they also apply mutatis mutandis to a system and a method, as defined in claims 6 to 10 and claims 11 to 15, respectively.

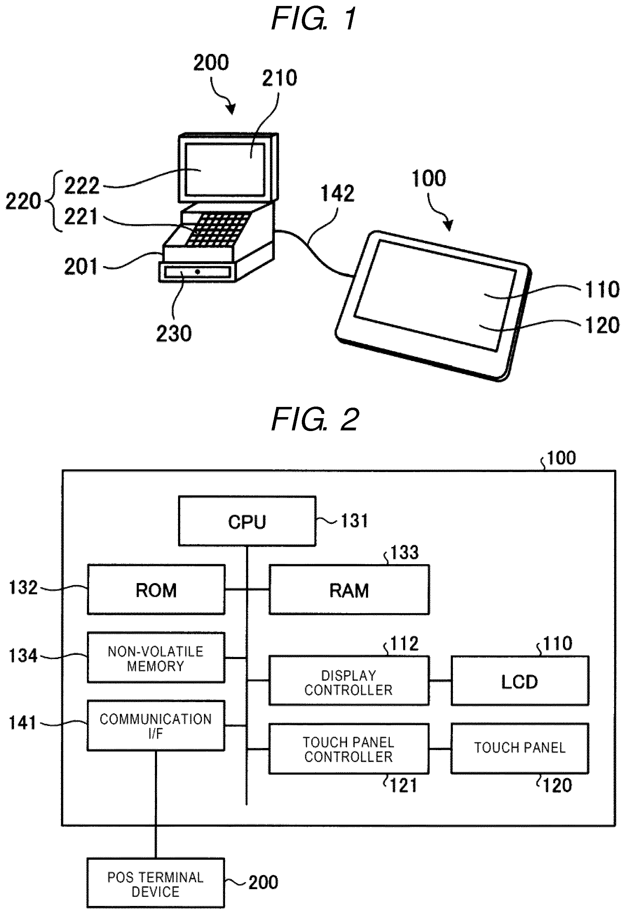

An exemplary embodiment will be described with reference to drawings. FIG. 1 is a diagram illustrating appearances of a portable terminal device 100 which is a signature input device and a POS terminal device 200 which is a higher device to which the portable terminal device 100 is connected in an exemplary embodiment. The portable terminal device 100 and the POS terminal device 200 configure a signature input system.

The POS terminal device (sales data registration device and settlement device) 200 receives an operation of a clerk who is an operator and performs registration processing (sales data registration processing) and settlement processing of a commodity purchased by a shopper.

The POS terminal device 200 includes a display unit 210, an operation unit 220, a drawer 230 and the like. The display unit 210 is, for example, a liquid crystal display (LCD) and is stand on the back side of an upper side of a main body 201 and displays information toward the clerk. The operation unit 220 includes a keyboard 221 provided on the front side of the upper side of the main body 201, a touch panel 222 superposed on the surface of the display unit 210, a barcode scanner (not illustrated) and the like and receives various operations by these components from the clerk. The drawer 230 is positioned below the main body 201 and is a drawer-shaped lockable box and houses coins or paper money in a manner to be freely put and taken out.

The POS terminal device 200 saves a price look-up (PLU) file received from a store controller in a non-volatile storage medium (not illustrated) such as a hard disk drive (HDD). For example, table format data and a commodity code and commodity information (commodity name, commodity price and the like) are stored to be associated with each other in the PLU file.

One of commodity registration schemes is a scheme using a barcode scanner. A barcode corresponding to a commodity code is attached to most of commodities and the barcode scanner reads the barcode to thereby allow the POS terminal device 200 to read the commodity code. The POS terminal device 200 takes commodity information associated with the commodity code out of the PLU file and registers the commodity information as (one of) commodities on a settlement of one transaction. When the POS terminal device 200 ends registration processing of the commodity purchased by a shopper, settlement processing is performed.

The portable terminal device 100 is so-called tablet type terminal device and is a substantially rectangular plate shaped device. The portable terminal device 100 includes an LCD 110 having a screen 111 which occupies most of a surface of the exterior. The LCD 110 is an example of the display unit.

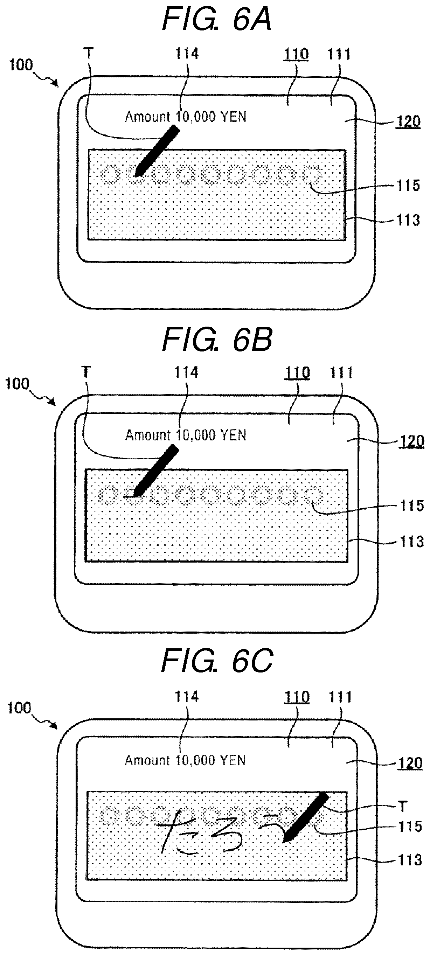

A touch panel 120 is provided on the surface of the LCD 110. The touch panel 120 is a main portion of a function unit (operation unit) which is provided in the portable terminal device 100 and receives an operation. The touch panel 120 is an example of the input unit which receives an input by being in contact with a detection object. The detection object is, for example, a predetermined writing tool T (see FIG. 6) or the fingers.

A detection method of the touch panel 120 may be a known detection method, for example, a pressure sensitive-type detection method and capacitance-type detection method. According to the pressure sensitive-type detection method, any object capable of applying pressure may be used as a detection object. According to the capacitance-type detection method, a substance having a predetermined conductivity (suitably pen-shaped or rod-shaped writing tool) or a portion of a human body may be used as a detection object.

FIG. 2 is a block diagram illustrating a configuration of the portable terminal device 100. The portable terminal device 100 includes a display controller 112, a touch panel controller 121, a central processing unit (CPU) 131, a read only memory (ROM) 132, a random access memory (RAM) 133, a non-volatile memory 134, and a communication interface (I/F) 141, in addition to the configuration described above. The CPU 131, the ROM 132, and the RAM 133 configure the control unit 130.

The display controller 112 drives and controls the LCD 110 based on screen data according to control of the control unit 130 and causes an image corresponding to the screen data to be displayed on the screen 111. The touch panel controller 121 transmits an output according to a position touched by the detection object to the control unit 130. The communication I/F 141 includes insertion ports of a cable 142 (see FIG. 1) connecting the portable terminal device 100 and the POS terminal device 200 and performs communications between the portable terminal device 100 and the POS terminal device 200.

The ROM 132 stores various programs executed by the CPU 131. The RAM 133 is used as a work area where variable data is stored to be freely rewritten. The CPU 131 deploys the program stored in the ROM 132 onto the RAM 133 and executes various operation processing to thereby function as various modules and control respective units of the portable terminal device 100. The non-volatile memory 134 is a rewritable non-volatile memory storing various settings.

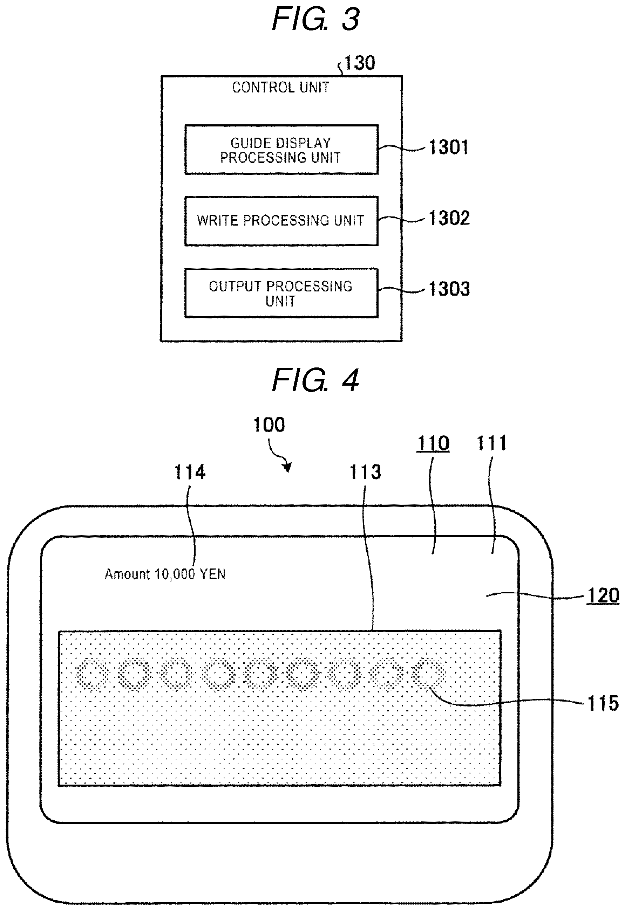

FIG. 3 is a block diagram illustrating a functional configuration of the portable terminal device 100. The CPU 131, the ROM 132, and the RAM 133 configure the control unit 130. The control unit 130 integrally controls respects components of the portable terminal device 100. The control unit 130 has a guide display processing unit (guidance unit) 1301, a write processing unit (write unit) 1302, and an output processing unit (output unit) 1303.

Here, the portable terminal device 100 is used for inputting signature data requested by the POS terminal device 200 when a settlement (for example, credit settlement) which requires a signature by a person (that is, shopper) who pays the price is made.

FIG. 4 is a front view of the portable terminal device 100 which indicates display contents of the LCD 110 before signing is performed. The control unit 130 causes the input field 113 indicating an area which receives a write of signature by the shopper to be displayed on the LCD 110. The control unit 130 causes a character string 114 indicating an amount to be displayed around the input field 113, for example, an upper side of the input field 113. The character string 114 is, for example, "Amount 10000 Yen".

The guide display processing unit 1301 displays guide information 115 inside the input field 113. The guide information 115 is information which guides a signer (shopper) when writing a signature. The guide information 115 is a character string, for example, "Please sign here". Information (for example, a place where signature is to be written) needed when signing is performed is notified to the signer by the guide information 115.

When a signature input is requested from the POS terminal device 200, the guide display processing unit 1301 causes the LCD 110 to display the guide information 115.

Here, the guide display processing unit 1301 causes the LCD 110 to display the guide information 115 by a color (for example, light color such as light blue or yellowish green) which is easy to be distinguished from a color (for example, black) of a line displaying a signature. A background color of the input field 113 may not be white, but may be a color of reduced brightness in order to clearly indicate the guide information 115 displayed by a light color. For example, when a color of the guide information 115 is light blue, a background color may be blue or the like.

A shopper who is a signer signs a signature inside the input field 113 using a writing tool T or the like handed from a clerk. That is, the shopper moves the tip of the writing tool T by putting the writing tool T to a position of the touch panel 120 at which the input field 113 is displayed.

When the touch panel 120 receives an input into the input field 113, the write processing unit 1302 superposes the input on the guide information 115 based on an output from the touch panel 120 and displays, inside the input field 113, a locus of the detection object (a predetermined writing tool T or the like) brought into contact with the input field 113. The locus becomes a signature. The write processing unit 1302 causes the LCD 110 to display a signature by a line of a dark color such as black.

The write processing unit 1302 erases the locus when the detection object brought into contact with the touch panel 120 moves from an inside of the input field 113 to an outside thereof. That is, when the locus which is being displayed while being updated is moved out of the input field 113, the write processing unit 1302 erases the locus. With this, a signature is not contained in (is moved out of) the input field 113, the signer is requested to rewrite a signature.

When the write processing unit 1302 erases the locus, the guide display processing unit 1301 causes attention information (not illustrated) to be displayed inside the input field 113. In this case, the attention information is contents of explanations for requesting signature rewriting and is, for example, "Please be informed that signature is moved out of a field and rewriting of signature is requested."

The output processing unit 1303 outputs data of an image containing the signature displayed inside the input field 113. More specifically, the output processing unit 1303 turns the signature obtained by excluding the guide information 115 from the display contents of the input field 113 into image data and transmits the image data to the POS terminal device 200 via the communication I/F 141.

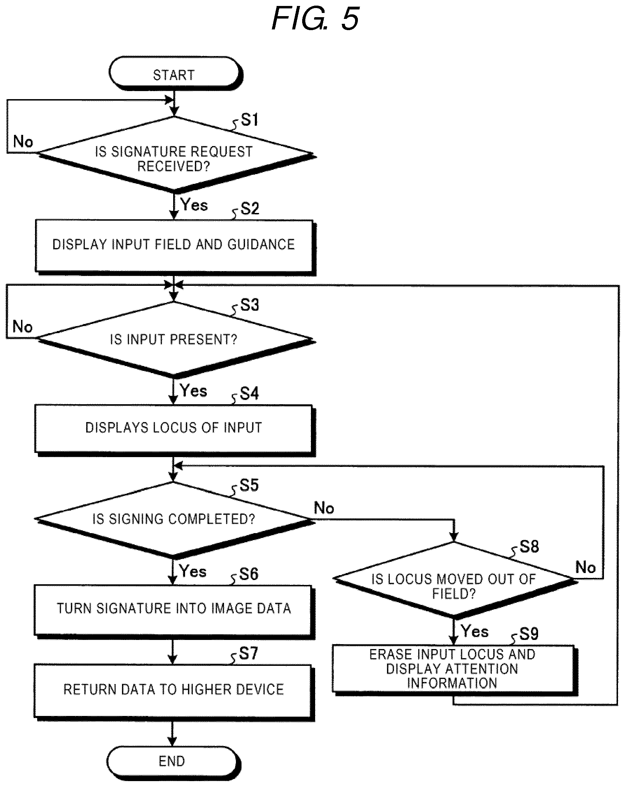

In such configuration, processing performed by the portable terminal device 100 and the POS terminal device 200 will be described in the following. FIG. 5 is a flowchart indicating a flow of processing performed by the control unit 130 of the portable terminal device 100. FIGs. 6A to 6C are diagrams indicating transitions of the display contents of the LCD 110.

The control unit 130 of the portable terminal device 100 waits for a signal requesting a signature input (No in Act S1). When a signature request is received from the POS terminal device 200 which is conducting settlement processing of a credit settlement (Yes in Act S1), the control unit 130, as illustrated in FIG. 6A, causes the LCD 110 to display the input field 113 and guide information 115 (Act S2).

Subsequently, the control unit 130 waits for an input into the input field 113 (No in Act S3). When an input into the input field 113 is performed as illustrated in FIG. 6B (Yes in Act S3), the control unit 130, as illustrated in FIG. 6C, displays a locus of the input on the input field 113 (Act S4).

Next, the control unit 130 determines whether the signing is completed (Act S5). A completion of the signature is determined on the condition that an elapsed time from an interruption of an input by the detection object into the input field 113 exceeds a predetermined threshold value.

When it is determined that the signing is completed (Yes in Act S5), the control unit 130 turns an image being displayed inside the input field 113 into image data (Act S6) and returns (transmits) the image data to the POS terminal device 200 which is a higher device (Act S7).

In Act S5, when it is determined that the signing is not completed (No in Act S5), the control unit 130 determines whether the locus is moved out of the input field 113 (Act S8). When it is determined that the locus is moved out of the field (Yes in Act S8), the control unit 130 erases the locus being displayed on the input field 113 and causes attention information to be displayed inside the input field 113 (Act S9).

In Act S8, when it is determined that the locus is not moved out of the field (No in Act S8), the control unit 130 returns processing to Act S5.

As such, according to the present exemplary embodiment, the guide information 115 is displayed inside the input field 113 and thus, it is possible for even an inexperienced signer (shopper) to make it difficult to overlook the guide information 115. Accordingly, the signature input device according to the present exemplary embodiment may have improved usability.

According to the present exemplary embodiment, a space for displaying guidance other than the input field as in the related art is not required and thus, it is possible to increase an occupation ratio of the input field 113 in the screen 111. That is, it is possible to largely display the input field 113. Accordingly, even if a signature is input using a tablet type terminal device of which surface slidability is better than paper and in which a size of handwritten characters is likely to become large, it is possible to write characters large, make characters difficult to move out of the field, and make it easy to write characters. Accordingly, rewriting of a signature is rarely performed and with this, the time and effort for the rewriting can be saved.

In the present exemplary embodiment, although the POS terminal device 200 is an example of a settlement device performing a settlement, when the present exemplary embodiment is embodied, the present exemplary embodiment may also be applied to a signature input device connected to other settlement devices.

When the present exemplary embodiment is embodied, an operation button for performing rewriting into the input field 113 may be provided on the screen 111 to make it possible to receive an operation of rewriting from the signer.

Furthermore, when the present exemplary embodiment is embodied, a way of performing signing may be more specifically described by the guide information 115. For example, conditions requesting as a signature such as "Please sign inside field.", "Please sign with characters as large as possible.", "Please don't move out of field" or the like may be listed.

When the present exemplary embodiment is embodied, the guide display processing unit 1301 may erase the guide information 115 when an input into the input field 113 by the touch panel 120 is received. That is, the guide display processing unit 1301 may erase the guide information 115 with the start of displaying of the locus by the write processing unit 1302. As such, the guide information 115 is erased after writing of a signature and thus, it is possible to make the locus of writing easier to be viewed.

After a locus of writing is erased due to moving out of the field, attention information displayed inside the input field 113 by the guide display processing unit 1301 may be guide information ("Please sign here" or the like) which is the same as the guide information 115 displayed at first.

### Modification example of exemplary embodiment

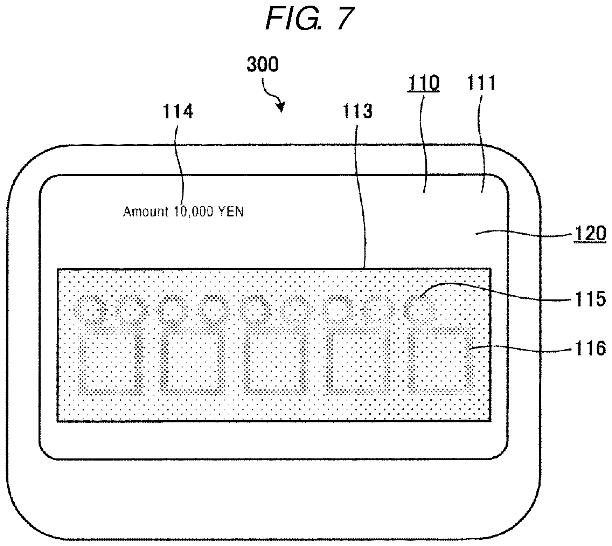

A modification example of the exemplary embodiment will be described with reference to drawings. FIG. 7 is a front view illustrating an example of screen display of the portable terminal device 300 in the present modification example. In the present modification example, description of the same portion as that of the exemplary embodiment will be omitted and description of the portion different from the exemplary embodiment will be described. In the present modification example, the same portion as that of the exemplary embodiment will be denoted by using the same reference numerals.

In the present modification example, the guide display processing unit 1301 instructs a size of characters suitable for a signature by the guide information 115. More specifically, the guide display processing unit 1301 displays a character string 116 inside the input field 113 as some of the guide information 115. The character string 116 is, for example, an "example of a character size" indicated by a font having a size preferable for a signature.

As in the present modification example, a character size preferable for a signature is guided by the character string 116 such that it is possible to avoid that a signer writes a signature using extremely small characters.

The character string 116 may also be symbols or figures.

As described above, a program executed by the signature input device (portable terminal device 100) of the present exemplary embodiment is provided by being incorporated into the ROM 132 or the like.

The program executed by the signature input device of the present exemplary embodiment may be configured to be provided, in a file having an installable format or an executable format, by being recorded in a computer readable recording medium such as a CD-ROM, a flexible disk (FD), a CD-R, a digital versatile disk (DVD).

Furthermore, it is also preferable that the program executed by the signature input device of the present exemplary embodiment is configured to be stored in a computer connected to a network such as the Internet and to be provided by being downloaded through a network. It is also preferable that the program executed by the signature input device of the present exemplary embodiment is provided or distributed through the network such as the Internet.

The program executed by the signature input device of the present exemplary embodiment is configured by a module including the respective units described above (guide display processing unit (guidance unit) 1301, write processing unit (write unit) 1302, and output processing unit (output unit) 1303). The CPU (processor) reads the program from storage medium and executes the program to load the respective units described above onto a main memory device. With this, the guide display processing unit 1301, the write processing unit 1302, and the output processing unit 1303 are generated on the main memory device.

While certain embodiments have been described, these embodiments have been presented by way of example only, and are not intended to limit the scope of invention. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

### Citation List

### Patent Literature

[PTL 1] JP-A-2015-207100

## Claims

1. A signature input device comprising:
a display unit that includes a screen displaying an image and has an input field indicating an area at which a signature is written;
a guide display processing unit that displays guide information when a signature is written inside the input field;
an input unit that is provided on a surface of the display unit and receives an input by being in contact with a detection object;
a write processing unit that displays, inside the input field, a locus of the detection object brought into contact with the input field; and
an output processing unit that outputs data of an image displayed inside the input field.

2. The device according to claim 1,
wherein when the input unit receives an input into the input field, the write processing unit displays the locus to be superposed on the guide information.

3. The device according to claim 1 or 2,
wherein the write processing unit erases the locus when the detection object brought into contact with the input unit moves from an inside of the input field to an outside of the input field.

4. The device according to any one of claims 1 to 3,
wherein the guide display processing unit instructs a size of characters for a signature according to the guide information.

5. The device according to any one of claims 1 to 4,
wherein the guide display processing unit displays the guide information in light color, and
the write processing unit displays the locus in a color darker than the guide information.

6. A system for inputting signature including:
a display means that includes a screen displaying an image and has an input field indicating an area at which a signature is written;
a guide display processing means that displays guide information when a signature is written inside the input field;
an input means that is provided on a surface of the display means and receives an input by being in contact with a detection object;
a write processing means that displays, inside the input field, a locus of the detection object brought into contact with the input field; and
an output processing means that outputs data of an image displayed inside the input field.

7. The system according to claim 6,
wherein when the input means receives an input into the input field, the write processing means displays the locus to be superposed on the guide information.

8. The system according to claim 6 or 7,
wherein the write processing means erases the locus when the detection object brought into contact with the input means moves from an inside of the input field to an outside of the input field.

9. The system according to any one of claims 6 to 8,
wherein the guide display processing means instructs a size of characters for a signature according to the guide information.

10. The system according to any one of claims 6 to 9,
wherein the guide display processing means displays the guide information in light color, and
the write processing means displays the locus in a color darker than the guide information.

11. A method for inputting signature, comprising the steps of:
- providing, in a display means, a screen displaying an image and an input field indicating an area at which a signature is written;
- displaying, by a guide display processing means, guide information when a signature is written inside the input field;
- providing an input means on a surface of the display means, the input means receiving an input by being in contact with a detection object;
- displaying, inside the input field, by a write processing means, a locus of the detection object brought into contact with the input field; and
- outputting, by an output processing means, data of an image displayed inside the input field.

12. The method according to claim 11,
wherein the displaying step by the write processing means comprises displaying the locus to be superposed on the guide information, when the input means receives an input into the input field.

13. The method according to claim 11 or 12,
wherein the displaying step by the write processing means comprises erasing the locus when the detection object brought into contact with the input means moves from an inside of the input field to an outside of the input field.

14. The method according to any one of claims 11 to 13,
wherein the displaying step by the guide display processing means comprises instructing a size of characters for a signature according to the guide information.

15. The method according to any one of claims 11 to 14,
wherein the displaying step by the guide display processing means comprises displaying the guide information in light color, and
the displaying step by the write processing means comprises displaying the locus in a color darker than the guide information.
